# EUROPÄISCHE PATENTSCHRIFT

(11) **EP 1 690 148 B1**
(45) Veröffentlichungstag und Bekanntmachung des Hinweises auf die Patenterteilung: **05.03.2008**
(21) Anmeldenummer: 04798059.4
(22) Anmeldetag: 24.11.2004
(51) Int. Cl.: G05B 23/02, G05B 15/02

(54) **VERFAHREN ZUR ZEITNAHEN ÜBERWACHUNG, ERFASSUNG UND ÜBERMITTLUNG VON PROZESSDATEN**
METHOD FOR MONITORING, COLLECTING AND TRANSMITTING PROCESS DATA
PROCEDE DE SURVEILLANCE, DE SAISIE ET DE TRANSMISSION DE DONNEES D'UN PROCESSUS

(30) Priorität: 01.12.2003 DE 10356628
(43) Veröffentlichungstag der Anmeldung: 16.08.2006
(73) Patentinhaber: TUCHENHAGEN GmbH, 21514 Büchen (DE)
(72) Erfinder: WATZLAW, Marian, 19258 Schwanheide (DE); PORATH, Bernd, 23881 Breitenfelde (DE); COURA, Herbert, 21514 Büchen (DE)
(86) Internationale Anmeldenummer: PCT/EP2004/013307
(87) Internationale Veröffentlichungsnummer: WO 2005/059668

(56) Entgegenhaltungen:
- DD-B- 213 539
- DE-A1- 10 125 652
- DE-U1- 20 305 678
- PATENT ABSTRACTS OF JAPAN Bd. 1998, Nr. 11, 30. September 1998 (1998-09-30) & JP 10 160591 A (T & D:KK), 19. Juni 1998 (1998-06-19)

## Beschreibung

### TECHNISCHES GEBIET

Die Erfindung betrifft ein Verfahren zur zeitnahen Überwachung, Erfassung und Übermittlung von physikalischen Größen in verfahrenstechnischen Prozessen, insbesondere von Druck und Temperatur, bei dem die Istwerte der in Frage kommenden physikalischen Größen bei Überschreiten eines vorgegebenen Grenzwertes dieser physikalischen Größe zeitnah erfasst und für eine Ausgabe derselben oder andere daraus ableitbare Maßnahmen bereitgestellt werden, wobei der jeweilige Grenzwert einen Bereich der physikalischen Größe begrenzt, bei dessen einmaligem oder wiederholtem Verlassen eine zu überwachende Prozesskomponente Schaden nehmen kann.

### STAND DER TECHNIK

Es ist bekannt, die Prozessdaten verfahrenstechnischer Prozesse, wie beispielsweise Druck, Temperatur, Durchfluss, Konzentration, Leitfähigkeit, Feuchtigkeit, und andere physikalische Größen, zeitnah zu überwachen, zu erfassen, auf verschiedenste Arten anzuzeigen und auch vom Ort der Messwertaufnahme an einen anderen Ort zur Messwertspeicherung, -anzeige und ggf. -beurteilung zu übertragen (Fernüberwachung). Eine diesbezügliche Prozessdatenüberwachung erfordert im Regelfall einen entsprechenden personellen Einsatz. Dieser ist immer dann gerechtfertigt und auch erforderlich, wenn sicherheitsrelevante Prozesse gegeben sind. Als Beispiel sei hier beispielsweise die Überwachung kritischer Parameter in Kernkraftwerken oder bei chemischen Prozessabläufen genannt, wo insbesondere bei Störfällen radioaktive bzw. toxische Substanzen freigesetzt werden können.

In Prozessanlagen der Nahrungsmittel- und Getränkeindustrie, der Pharmazie, der Chemie und der Biotechnologie, soweit hier nicht die vorstehend beispielhaft erwähnten sicherheitsrelevanten Bereiche betroffen sind, ist oftmals eine lückenlose, fortwährende Datenüberwachung nicht erforderlich. Hier ist in der Regel eine genauere Beobachtung und Analyse des Prozesses dann angezeigt, wenn beispielsweise das herzustellende oder zu bearbeitende Produkt nicht den gewünschten Anforderungen entspricht. In diesem Falle ist es dann erforderlich, ggf. Ursachenforschung für Abweichungen vom angestrebten Ergebnis zu betreiben. Man ist in solchen Fällen darauf angewiesen, dass das System, in der Regel komplexe Rohrleitungssysteme mit Ventilen, Behältern, Förderpumpen und anderen Prozesskomponenten, über geeignete Messstellen für die relevanten physikalischen Größen verfügt, die dann über eine bestimmte Zeitspanne mit einer vorgegebenen Abtastrate bzw. Abtastfrequenz oder auch kontinuierlich erfasst und einer Beurteilung unterzogen werden können.

Ein weiterer Grund liegt dann vor, physikalische Größen, die für verfahrenstechnische Prozesse relevant und signifikant sind, zeitweilig zu erfassen, wenn Komponenten in diesen Prozesssystemen ihre üblicherweise zu erwartende Lebensdauer nicht erreichen und vorzeitig Schaden nehmen. Ursache hierfür können Störungen im Prozessablauf sein, die zu nicht planmäßigen, unerwartet hohen Beanspruchungen dieser Prozesskomponenten führen, für die diese nicht ausgelegt sind.

Falls es sich nicht um Störungen im Prozessablauf, sondern um dem Prozessablauf zwangsläufig innewohnende, jedoch nicht vorhergesehene Ereignisse mit den vorg. Ergebnissen handelt, wobei diese Ereignisse durch die verfahrenstechnische Auslegung und apparative Realisierung des Prozesses verursacht sind, so können die geschädigten Prozesskomponenten zumindest einen Hinweis auf ggf. vorliegende Auslegungsfehler liefern.

Scheiden derartige Ursachen aus, weil der verfahrenstechnische Prozess planmäßig abläuft und auch fachgerecht ausgelegt ist, dann kann die Ursache für den vorzeitigen Ausfall bzw. Defekt einer Prozesskomponente darin zu suchen sein, dass diese den Anforderungen von vornherein nicht entspricht. Sie kann beispielsweise falsch dimensioniert, falsch ausgewählt und/oder fehlerhaft eingebaut sein.

An einem konkreten und typischen Fall soll der vorgenannte, allgemein dargestellte Sachverhalt verdeutlicht werden. In verfahrenstechnischen Prozessen der Nahrungsmittel- und Getränkeindustrie, der Pharmazie, der Chemie oder der Biotechnologie, bei denen es auf eine Behandlung des Produktes oder Zwischenproduktes unter sterilen Arbeitsbedingungen ankommt, werden beispielsweise Ventile eingesetzt, bei denen die Ventilsfangendurchführung durch das Gehäuse mittels eines sog. Faltenbalges oder Wellrohres überbrückt ist. Durch diese Art der Abdichtung soll vermieden werden, dass im Zuge der Schaltbewegung des Ventils an der Venülstangendurchführung anstehendes Produkt über den sog. "Fahrstuhleffekt" in den Dichtungsbereich verschleppt wird, wo es zur Keimbildung und, infolge der hin- und hergehenden Ventilstangenbewegung, zu einem Transport dieser Keime in den Produktraum und dadurch zu einer Rekontamination des Produktes kommen kann.

Derartige Faltenbälge oder Wellrohre sind, damit sie leicht elastisch verformbar sind, in der Regel dünnwandig ausgeführt und demzufolge äußerst empfindlich gegen Druckbeaufschlagung aus dem sie umgebenden Produkt Diese Druckbeaufschlagung kann in einer unzulässigen Druckerhöhung oder Druckunterschreitung (Unterdruck) bestehen. Der Faltenbalg oder das Wellrohr wird bei Druckerhöhung verpresst, es kommt über die zulässige elastische Verformung hinaus zu plastischen Verformungen, insbesondere im Bereich der Falten, bis hin zum Bruch derartiger Falten. Im Falle eines Bruches tritt Produkt in den Innenraum des Faltenbalges oder Wellrohres ein oder das den Innenraum des Faltenbalges beaufschlagende Medium, meist Luft aus der Umgebung oder ein inertes Gas, dringt in den Produktraum ein. In diesem Falle ist ein Prozessablauf unter den geforderten sanitären Bedingungen nicht mehr gegeben und es ist möglichst zeitnah ein Abbruch des Prozesses erforderlich, damit die defekten Komponenten ausgetauscht werden können. Im vorstehend geschilderten Falle ist es wünschenswert, die möglichen Ursachen für einen vorzeitigen Bruch des Faltenbalges oder Wellrohres bereits vor Eintritt des Schadensereignisses zu erkennen.

Der vorzeitige Bruch eines Faltenbalges oder Wellrohres ist in den meisten Fällen bedingt durch sog. Druckschläge im Rohrleitungssystem. Derartige Druckschläge kommen dann zustande, wenn relativ lange Rohrleitungsstränge, in denen inkompressible Flüssigkeit strömt, beispielsweise durch Absperrventile abrupt verschlossen werden. Dies ist in der Regel dann der Fall, wenn das Schließglied dieses Absperrventiles in Strömungsrichtung schließt und dementsprechend, verstärkt durch die Strömungs- und Druckkräfte, schlagartig auf seine Sitzfläche gepresst wird. Erfolgt die Schließbewegung nicht gedämpft oder in geeigneter Weise verzögert, dann wird die in der relativ langen Rohrleitung befindliche Flüssigkeitsmasse über eine relativ kurze Zeitspanne verzögert und es kommt nach dem Grundgesetz der Mechanik (Kraft = Masse x Beschleunigung) zu einer relativ großen Kraft auf das Hindernis, in diesem Falle auf das Schließglied und dessen Umgebung. Dieser sog. Druck- oder Kraftstoß breitet sich aufgrund der physikalischen Gesetzmäßigkeiten im gesamten System aus und keine der mit diesem Druckstoß beaufschlagten Komponenten oder Komponententeile bleiben hiervon verschont Befindet sich in einem diesbezüglich mit einem Druckschlag beaufschlagten Rohrleitungssystem ein Faltenbalg oder ein Wellrohr, der/das empfindlich auf Druck- oder Kraftstöße reagiert, dann kann es zu den vorgenannten Schäden an diesem empfindlichen Bauteil kommen.

Zur Vermeidung der vorstehend geschilderten Druckstöße ist bekannt, beispielsweise Absperrventile gegen die Strömungsrichtung schließen zu lassen. Ist dies aus Gründen der Prozessführung nicht möglich, weil beispielsweise ein Ventil in der einen und ein anderes mal in der anderen Richtungen durchströmt werden muss, dann kann man dafür Sorge tragen, dass die Schließbewegung des Schließgliedes über geeignete Dämpfungseinrichtungen nachhaltig verzögert wird. Darüber hinaus sind Maßnahmen zur Kompensation derartiger Druckstöße bekannt, die beispielsweise darin bestehen, dass an das druckstoßgefährdete Rohrleitungssystem Speichersysteme angeschlossen sind, in denen sich ein ' kompressibles Medium befindet.

Die vorstehende Schilderung soll verdeutlichen, dass als Ursache für einen Defekt des Faltenbalges oder Wellrohres neben einer von vornherein nicht ausreichenden Dimensionierung dieses Bauteils auch eine fehlerhafte Konzeption der in Frage kommenden Anlagenteile oder aber auch eine nicht vorhersehbare Störung im Prozessablauf, die zu einer unplanmäßigen Veränderung einer physikalischen Größe führt, verantwortlich sein kann. Die notwendige Ursachenforschung erfordert eine Überwachung, Erfassung und Übermittlung der in Frage kommenden physikalischen Größen, die nachfolgend auch unter dem Begriff Prozessdaten subsumiert werden, damit einerseits Abhilfe geschaffen werden kann und andererseits die Verantwortlichkeiten und daraus resultierend Fragen der Kostenübernahme zur Beseitigung defekter Bauteile geklärt werden können.

In der Firmendruckschrift GEA Tuchenhagen, Büchen, DE, **VARIVENT^{®}-In-line Kontroll- und Messtechnik, 624d-00**, oder der Firmendruckschrift GEA Tuchenhagen, Büchen, DE, **VARIVENT^{®} Aufnahmearmaturen für die In-line Kontroll- und Messtechnik, 639d-01,** sind sog. In-line-Gehäuse dargestellt, die mit entsprechenden Messwertaufnehmern zu bestücken sind. Derartige Gehäuse sind totraumfrei und sie erlauben beispielsweise, weil sie zwei einander gegenüberliegende Gehäuseanschlüsse aufweisen, am gleichen Messort die Aufnahme von zwei unterschiedlichen physikalischen Messgrößen.

Weiterhin ist aus der Firmendruckschrift **PWBlogg, Typ N4/7** der Paul Wegener GmbH, Ballenstedt, DE, ein Datenmess- und Speichersystem bekannt (Stand: 03.12.2002), das bei dem nachfolgend beschriebenen erfindungsgemäßen Verfahren Anwendung findet. Darüber hinaus sind in dieser Firmendruckschrift Komponenten zur Datenfernübertragung der mit dem vorgenannten System generierten Messdaten genannt.

Das Dokument DD 213 539 A1 offenbart bereits ein Verfahren zur zeitnahen Überwachung, Erfassung und Übermittlung von physikalischen Größen in verfahrenstechnischen Prozessen, bei dem die Istwerte der in Frage kommenden physikalischen Größen bei Überschreiten eines vorgegebenen Grenzwertes dieser physikalischen Größe zeitnah erfasst und für eine Ausgabe derselben bereitgestellt werden, wobei der jeweilige Grenzwert einen Bereich der physikalischen Größe begrenzt, bei dessen einmaligem oder wiederholtem Verlassen eine zu überwachende Prozesskomponente Schaden nehmen kann.

Es ist Aufgabe der vorliegenden Erfindung, ein Verfahren der gattungsgemäßen Art zu schaffen, mit dem bei Überschreiten eines bestimmten Grenzwertes die Überwachung für eine bestimmte Zeitspanne intensiviert wird.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des vorgeschlagenen Verfahrens sind Gegenstand der Unteransprüche.

Der erfinderische Grundgedanke besteht darin, die relevante physikalische Größe des Prozesses, im vorliegenden Fall ist dies mit Blick auf die Beanspruchung von Faltenbälgen oder Wellrohren der Druck in einer Rohrleitung, dann zeitnah zu überwachen, zu erfassen und zu übermitteln, wenn ein bestimmter Grenzwert dieser physikalischen Größe, für die die betreffende Komponente hinreichend ausgelegt ist, überschritten wird. Überschreiten des Grenzwertes ist im vorliegenden Falle derart zu verstehen, dass der jeweilige Grenzwert einen Bereich der physikalischen Größe begrenzt, bei dessen einmaligem oder wiederholtem Verlassen eine zu überwachende Prozesskomponente Schaden nehmen kann. Bei Überdruck im Prozesssystem bedeutet dies, dass bei Überschreiten des Grenzwertes ein Überdruck vorliegt, der größer als der durch den Grenzwert definierte Überdruck ist. Bei Unterdruck im Prozesssystem bedeutet dies, dass bei Überschreiten des Grenzwertes ein Unterdruck gegeben ist, der kleiner ist als der durch den Grenzwert definierte Unterdruck (im Sinne eines absoluten Druckes demnach näher am absoluten Vakuum (p = 0) als der Grenzwert).

Zu diesem Zweck verfügt die Anordnung zur Durchführung des Verfahrens über einen entsprechenden Sensor, im vorliegenden Falle einen Drucksensor, der an geeigneter Stelle im System angeordnet ist, den Druck misst und diesen in ein entsprechendes Signal umwandelt, das in einem Datenmess- und Speichersystem verarbeitet werden kann.

Das Erreichen bzw. Überschreiten des Grenzwertes startet nun die zeitnahe Messwertaufnahme und -speicherung der Istwerte der physikalischen Größe über eine bestimmte Zeitspanne. In dieser Zeitspanne werden die Istwerte mit einer vorbestimmten Abtastrate bzw. Abtastfrequenz gemessen und gespeichert. Die Kriterien zur Beendigung der Zeitspanne sind im Vorhinein festgelegt. Bei einer Grenzwertverletzung kann als Abtastrate eine sog. Alarmrate festgelegt werden, während für den Fall, dass keine Grenzwertverletzung vorliegt, aber dennoch eine Überwachung der physikalischen Größe durchgeführt werden soll, eine von der Alarmrate sich unterscheidende Abtastfrequenz hinterlegt ist. Gleichzeitig mit dem Zeitpunkt für den Start der Messung wird der Messort festgestellt und registriert, Uhrzeit und Datum werden erfasst Die aus den Istwerten der physikalischen Größen resultierenden Prozessdaten werden dem Ort, dem Datum und der Uhrzeit ihrer Generierung eindeutig zugeordnet.

Eine vorteilhafte Verfahrensvariante zeichnet sich dadurch aus, dass eine Überwachung im erfindungsgemäßen Sinne nur im Alarmfall, d.h. bei einer Grenzwertverletzung erfolgt. Zu diesem Zweck sieht eine vorteilhafte Ausgestaltung des vorgeschlagenen Verfahrens vor, dass die Zeitspanne der Überwachung beendet wird, wenn der Grenzwert unterschritten ist und das Maß der Unterschreitung einen vorgegebenen Betrag oder einen vorgegebenen Prozentsatz vom Grenzwert erreicht hat.

Für den Fall, dass keine Grenzwertverletzung mehr festgestellt wird, kann gemäß einer weiteren Verfahrensausgestaltung vereinbart werden, dass nach Ablauf der vorgenannten Zeitspanne die Istwerte der physikalischen Größe weiter fortlaufend gemessen und angezeigt, aber nicht aufgezeichnet werden. Damit kann wertvoller Speicherplatz gespart werden. Außerdem wird damit die Auswertung von Grenzwertverletzungen erheblich vereinfacht.

Eine weitere Verfahrensvariante sieht aber auch vor, dass eine Messung und Speicherung der physikalischen Größen, unabhängig von Grenzwertüberschreitungen, zu bestimmten Zeiten und über bestimmte vorgegebene Zeitspannen erfolgt. Auch hier kann vereinbart werden, ob die Messdaten nur angezeigt oder aber auch aufgezeichnet werden sollen.

Grundsätzlich ist vorgesehen, dass die durch das erfindungsgemäße Verfahren gewonnenen Prozessdaten, in welcher Verfahrensvariante diese auch immer gewonnen wurden, angezeigt, ausgedruckt oder ausgelesen werden. Da es sich u.U. um große Datenmengen handelt; ist vorgesehen, sobald ein interner Datenspeicher des Datenmess- und Speichersystems vollständig belegt ist, die Daten in einen externen Speicher auszulesen. Darüber hinaus können die Prozessdaten auch an einen zentralen Rechner und/oder zentralen Drucker übermittelt werden, die mit dem Datenmess- und Speichersystem direkt verbunden sind. In diesem Zusammenhang ist vorgesehen, die Prozessdaten durch drahtlose oder drahtgebundene Datenfernübertragung auszulesen.

Eine Grenzwertüberschreitung wird in einer sog. Online-Anzeige am Display des Datenmess- und Speichersystems, d.h. am Ort der Erfassung dargestellt. Darüber hinaus verfügt dieses System über wenigstens einen separaten Alarmausgang zur Signalisierung von Grenzwertverletzungen. Diese Signalisierung erfolgt am Ort der Erfassung und/oder am Ort der Speicherung (interner oder externer Datenspeicher).

Das Verfahren sieht gemäß einer weiteren vorteilhaften Ausgestaltung vor, den Alarmzustand (Grenzwertverletzung) an einer weit vom Messort entfernten. Stelle anzuzeigen. Hierfür gibt es verschiedene Möglichkeiten:
- Ansteuerung eines potenzialfreien Schalters, Aktivierung vorhandener Meldeeinrichtungen;
- Alarmmeldung (Grenzwertverletzung) per SMS an ein Mobiltelefon mittels eines an das Datenmess- und Speichersystem angeschlossenen sog. GSM-Modems;
- Alarmmeldung (Grenzwertverletzung) per Sprachausgabe durch Grenzwertmeldegerät.

Die Verfahrensvariante, bei der die Alarmmeldung in Form einer SMS an ein Mobiltelefon übermittelt wird, ist von besonderer Bedeutung und von Vorteil für den vorstehend dargestellten Fall, wo Ursachenforschung für auftretende Schadensfälle betrieben werden muss, und einerseits der Betreiber der Prozessanlage und andererseits der Lieferant von kritischen Prozesskomponenten an einer Klärung interessiert sind.

Eine Signalisierung einer Grenzwertverletzung in Form einer Sprachausgabe ist überall dort möglich, wo ein Telefonanschluss zur Verfügung steht. Das Grenzwertmeldegerät wird mit dem Telefonanschluss verbunden und muss über das mitgelieferte Netzteil mit Strom versorgt werden. Es können beispielsweise mehrere Rufnummern eingegeben werden, die im Alarmfall angewählt werden. Bei Abnahme des Hörers wird eine bis zu 20 Sekunden lange Sprachmeldung gesendet.

Druckänderungen im Prozess können die vorstehend beschriebenen Ursachen haben (Druckstöße), sie können aber auch durch Änderungen anderer physikalischer Größen, wie beispielsweise die Temperatur, verursacht oder wenigstens in Grenzen beeinflusst sein. Um beispielsweise den Temperatureinfluss auf die Druckmesswerte ggf. herausrechnen und berücksichtigen zu können, sieht eine weitere Verfahrensvariante vor, zeitgleich und parallel mit der Messung der einen physikalischen Größe, beispielsweise des Druckes, am gleichen Ort eine Messung einer weiteren physikalischen Größe, beispielsweise der Temperatur, durchzuführen und die gewonnenen Temperaturmessdaten in entsprechender Weise, wie die Druckmessdaten, zu verarbeiten und ggf. zu übermitteln.

Neben der vorgenannten Grenzwert-Signalisierung sieht das vorgeschlagene Verfahren weiterhin auch die vorstehend bereits erwähnte Datenfernübertragung vor. Diese Datenfernübertragung ist, gemäß einer vorgeschlagenen Anordnung zur Durchführung des Verfahrens, entweder über ein sog. GSM-Modem oder über ein sog. analoges Modem möglich. Die Datenfernübertragung über das GSM-Modem erfolgt drahtlos, während die Übertragung mittels des analogen Modems über einen Telefonanschluss durchgeführt wird. Über beide Modem-Konfigurationen lassen sich Alarmmeldungen (Grenzwertverletzungen) und aktuell gespeicherte Prozessdaten fernauslesen.

Die vorgeschlagene Anordnung verfügt weiterhin über wenigstens einen Sensor zur Messung der physikalischen Größen, der mit einem Datenmess- und Speichersystem verbunden ist. Letzteres besitzt einen internen Datenspeicher, in dem die gewonnenen Prozessdaten zunächst abgelegt werden. Weiterhin kann an das Datenmess- und Speichersystem ein Drucker und ein externer Datenspeicher angeschlossen sein und es kann eine Verbindung mit einer zentralen Steuerung oder Rechnereinheit bestehen.

### KURZBESCHREIBUNG DER ZEICHNUNG

Eine Anordnung zur Durchführung des erfindungsgemäßen Verfahrens und eine Darstellung der mit der Anordnung zur Durchführung des Verfahrens beispielhaft gewonnenen Messdaten sind in der Zeichnung dargestellt und werden nachfolgend beschrieben. Es zeigen
- **Figur 1**: in schematischer Darstellung einen Ausschnitt aus einer Prozessanlage, bestehend aus Leitungsabschnitten, integrierter Förderpumpe, Behälter und Absperrventil, wobei eine Anordnung zur Durchführung des erfindungsgemäßen Verfahrens in Verbindung mit einer Messstelle zur Aufnahme von Druckmessdaten im Rohrleitungssystem dargestellt ist;
- **Figur 2**: ein Gehäuse für Messwertaufnehmer, wobei der Druck einerseits und die Temperatur andererseits am gleichen Messort gemessen werden;
- **Figur 3a**: einen ersten Druckverlauf in Abhängigkeit von der Zeit (p_{D} = f (t)), wie er mit einer labormäßigen Messeinrichtung ermittelt wird, wenn am Messort ein Druckstoß durch Schließen eines Absperrventils in Strömungsrichtung auftritt;
- **Figur 3b**: einen mit der erfindungsgemäßen Anordnung gewonnenen zweiten zeitlichen Druckverlauf p(t) entsprechend dem ersten zeitlichen Druckverlauf p_{D}(t) gemäß **Figur 3a****;**
- **Figur 4a**: einen unter den Bedingungen der Messanordnung gemäß **Figur 3a** ermittelten weiteren typischen ersten zeitabhängigen Druckverlauf p_{D}(t), wobei die Strömungsgeschwindigkeit in der Rohrleitung gegenüber der Anordnung gemäß **Figur 3a** erhöht ist;
- **Figur 4b**: einen dem ersten zeitlichen Druckverlauf p_{D}(t) gemäß **Figur 4a** entsprechenden zweiten zeitlichen Druckverlauf p(t), gewonnen mit der erfindungsgemäßen Anordnung;
- **Figur 5a**: einen weiteren typischen ersten zeitabhängigen Druckverlauf p_{D}(t), gewonnen mit einer Anordnung gemäß **Figur 3a****,** wobei die Strömungsgeschwindigkeit in der Rohrleitung gegenüber der Anordnung gemäß **Figur 4a** noch einmal erhöht wurde und
- **Figur 5b**: einen mit der erfindungsgemäßen Anordnung ermittelten zweiten zeitabhängigen Druckverlauf p(t), dem jener gemäß **Figur 5a** ursächlich zugrunde liegt.

### DETAILLIERTE BESCHREIBUNG

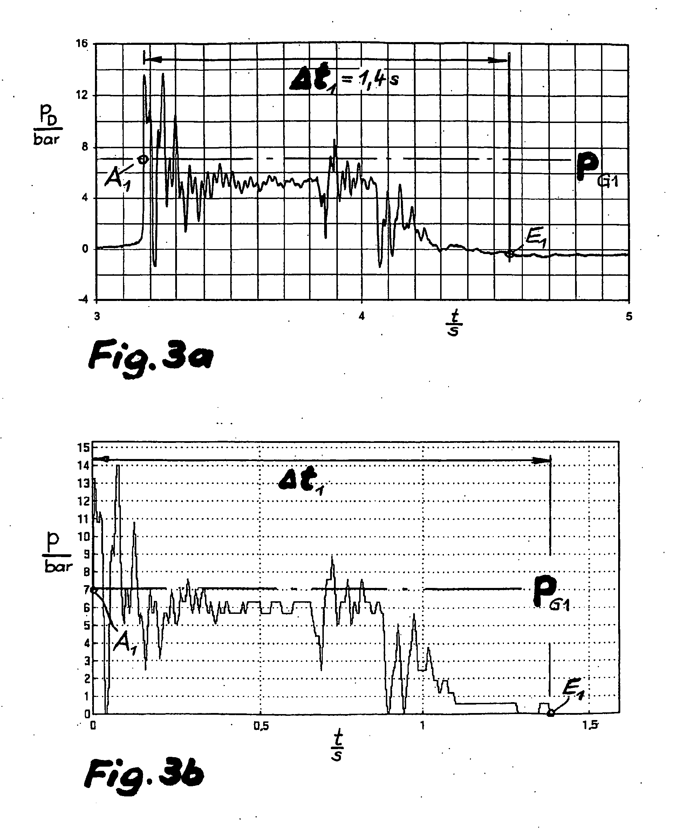

Ein Leitungsabschnitt 1 ist dann im Sinne der vorstehend geschilderten Problematik druckstoßgefährdet, wenn er mittels eines in Strömungsrichtung schließenden Absperrventils 9 in einer relativ kurzen Zeitspanne vollständig geschlossen werden kann. Im vorliegenden Falle befindet sich die druckschlaggefährdete Leitung 1 zwischen einem Behälter 8, in den ein vorgeordneter Leitungsabschnitt 1a einmündet, und dem in Rede stehenden Absperrventil 9, das den Leitungsabschnitt 1 mit einem nachgeordneten Leitungsabschnitt 1 b verbindet. Eine Förderpumpe 10 fördert beispielsweise ein flüssiges Produkt P aus dem Behälter 8 über den Leitungsabschnitt 1 und das Absperrventil 9 in den nachgeordneten Leitungsabschnitt 1b. Im Leitungsabschnitt 1 ist hinter der Förderpumpe 10 eine nicht näher dargestellte und bezeichnete Messstelle zur Durchführung einer Referenzmessung 11 (Referenzdruck p_{D}) vorgesehen, wobei im vorliegenden Falle dieser Referenzdruck p_{D} mit labortechnischen Messmitteln zeitnah und kontinuierlich aufgenommen und aufgezeichnet werden konnte (siehe hierzu auch die ersten zeitlichen Druckverläufe p_{D}(t) gemäß **Figuren 3a****,** **4a** **und** **5a**).

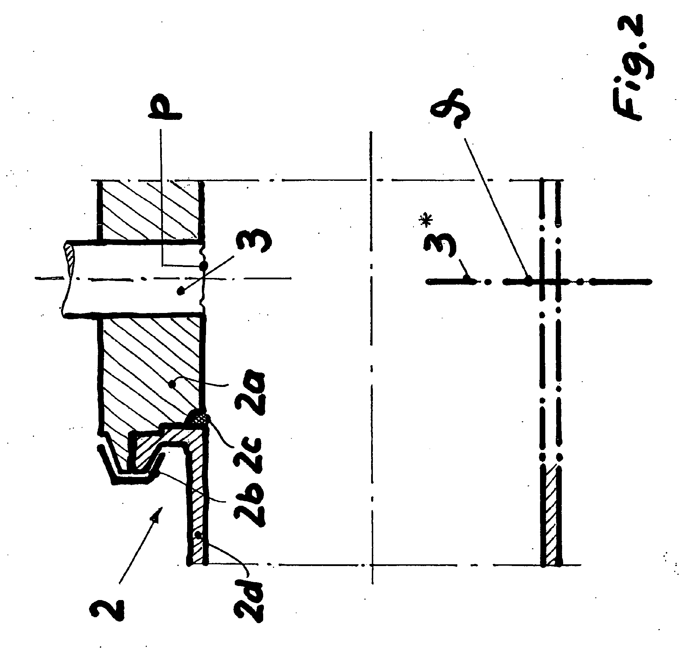

Möglichst nah am Absperrventil 9 ist im Leitungsabschnitt 1 ein Gehäuse für Messwertaufnehmer 2 vorgesehen (siehe hierzu auch **Figur 2****),** in dem, wenigstens ein erster Sensor 3 (beispielsweise ein Druckaufnehmer) angeordnet ist. Der erste Sensor 3 ist dabei spaltfrei in einem Verschlussteil 2a eingebettet, weiches in einer nicht bezeichneten Gehäuseöffnung in einem Gehäuseteil 2d mittels einer Gehäusedichtung 2c abgedichtet ist. Mittels einer Verbindungsklammer 2b werden ein nicht näher bezeichneter, am Gehäuseteil 2d angeordneter sogenannter Klammerflansch einerseits und ein zu diesem komplementärer, gleichfalls nicht bezeichneter Klammerflansch am Verschlussteil 2a andererseits form- und kraftschlüssig miteinander verbunden.

Entsprechend der Darstellung in **Figur 2** kann, dem ersten Sensor 3 zur Messung eines Druckes p gegenüberliegend, am Gehäuseteil 2d ein nicht näher dargestellter weiterer Gehäuseanschluss zur Aufnahme eines zweiten Verschlussteils vorgesehen sein, in dem ein zweiter Sensor 3* (beispielsweise zur Messung von Temperaturen ϑ) Aufnahme findet.

Der erste Sensor 3 ist über eine Leitung für Messdaten 3.1 mit einem Datenmess-und Speichersystem 4 verbunden, welches u.a. einen internen Datenspeicher 4a und wenigstens vier Anschlüsse zur Verbindung mit den nachfolgend genannten Geräten aufweist. Ein erster Anschluss 4.1 ist für die Verbindung mit einer nicht dargestellten zentralen Steuerungs- und/oder Recheneinheit vorgesehen. Ein zweiter Anschluss 4.2 ist bestimmt für die Verbindung mit einem gleichfalls nicht gezeigten Drucker zur Registrierung u.a. von Messdaten, Uhrzeit und Datum. Ein dritter Anschluss 4.3 führt zu einem Modem 5, welches als analoges Modem oder als sog. GSM-Modem ausgeführt sein kann. Über einen vierten Anschluss 4.4 können Daten aus dem internen Datenspeicher 4a in einen externen Datenspeicher 6 ausgelesen werden, insbesondere dann, wenn ersterer vollständig belegt ist. Das Modem 5 verfügt über einen ersten Modemanschluss 5.1, über den die Daten aus dem analogen Modem 5 über eine Telefonleitung an einen entfernten Ort übertragen werden können, und über einen zweiten Modemanschluss 5.2, der mit einer Antenne 7 zum Betrieb des dann als GSM-Modem ausgeführten Modems 5 Verwendung findet. In diesem Falle werden die Messdaten drahtlos an entsprechende Empfangsgeräte (Mobiltelefone) übermittelt.

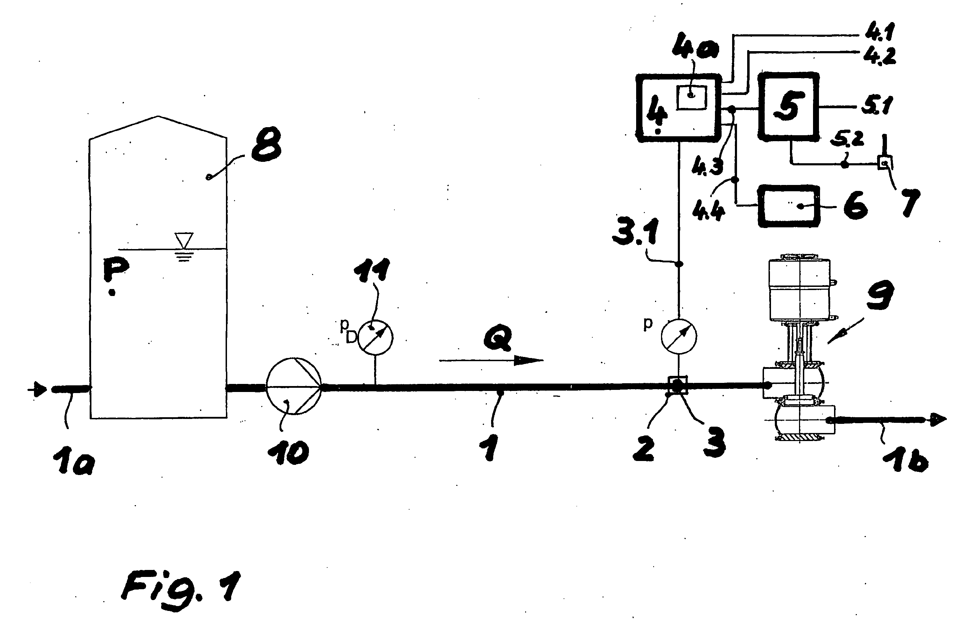

Wird in der Anordnung gemäß **Figur 1** beim Transport eines Volumenstromes Q, der in dem Leitungsabschnitt 1 beispielsweise eine Strömungsgeschwindigkeit c = 1,5 m/s erzeugt, das Absperrventil 9 geschlossen, welches in Strömungsrichtung schließt, dann stellen sich Druckstöße ein, die den in **Figur 3a** zeitlichen Druckverlauf p_{D}(t) nehmen (Ordinate: Druck p_{D} in bar, Abszisse: Zeit t in s).

Wird, wie dies das erfindungsgemäße Verfahren vorsieht, ein Grenzwert p_{G} des Druckes p im Datenmess- und Speichersystem 4 hinterlegt (z.B. ein erster Grenzwert p_{G1}= 7 bar), dann wird in diesem System der Messvorgang für den zeitlichen Druckverlauf p_{D}(t) gestartet. Ein Anfangspunkt der Überwachung A₁ (im vorliegenden Falle ein erster Anfangspunkt A₁) kennzeichnet den Überwachungszeitpunkt, wobei von diesem Zeitpunkt an eine Zeitspanne Δtᵢ (im vorliegenden Falle eine erste Zeitspanne Δt₁) für die Überwachung läuft. Im dargestellten Beispiel endet die Zeitspanne der Überwachung Δt₁ bei Erreichen eines Endpunktes der Überwachung Eᵢ (im vorliegenden Falle eines ersten Endpunktes E₁ (z.B. Δt₁= 1,4 s)). Die erste Zeitspanne Δt₁ ist im dargestellten Beispiel so bemessen, dass sie dann zu Ende ist, wenn der Druck p_{D} nachhaltig auf den Druck vor dem die Grenzwertverletzung auslösenden Ereignis abgefallen ist. Es kann aber auch festgelegt werden, dass die erste Zeitspanne Δt₁ der Überwachung beendet wird, wenn der Grenzwert p_{G1} unterschritten ist und das Maß der Unterschreitung einen vorgegebenen Betrag oder einen vorgegebenen Prozentsatz vom ersten Grenzwert p_{G1} erreicht hat.

Der erste zeitliche Druckverlauf p_{D}(t) lässt erkennen, dass eine beträchtliche Erhöhung des Druckes p_{D} zu verzeichnen ist, bezogen auf den normalen Betriebsdruck zur Sicherstellung einer Durchströmung der Leitung (Druckverlauf oberhalb von p_{D}= 0). Die höchsten Druckspitzen erreichen fast p_{D} = 14 bar. Der weitere Druckverlauf zeigt, dass es zu oszillatorischen Druckschwankungen im System kommt, die teilweise auch ein Unterschreiten des unter normalen Bedingungen sich einstellenden Druckes bewirken. Das Kriterium zur Beendigung der ersten Zeitspanne der Überwachung Δt₁ ist im Datenmess- und Speichersystem 4 hinterlegt.

Das erfindungsgemäß vorgeschlagene Datenmess- und Speichersystem 4 generiert infolge einer voreingestellten Abtastrate r in der vorgegebenen ersten Zeitspanne der Überwachung Δt₁ den in **Figur 3b** dargestellten zeitlichen Druckverlauf p(t). Der gewonnene Verlauf ist von der vorgesehenen Abtastrate r bzw. Abtastfrequenz moduliert. Diese Abweichungen im Vergleich zur analogen Messwertaufnahme gemäß **Figur 3a** sind zwar deutlich zu erkennen, sie sind jedoch in Bezug auf das mit der Messung zu erreichende Ziel, nämlich eine Grenzwertüberschreitung einerseits und ggf. auch maximale Druckspitzen andererseits zu erfassen und zu registrieren, ohne weiteres hinnehmbar.

Die dem zweiten zeitlichen Druckverlauf p(t) gemäß **Figur 3b** zugrunde liegenden Messdaten werden zunächst in dem internen Datenspeicher 4a gespeichert und sie können über den ersten Anschluss 4.1 an die zentrale Steuerung bzw. zentrale Rechnereinheit übermittelt und dort ausgewertet werden. Sie können darüber hinaus über den zweiten Anschluss 4.2 an den Drucker übermittelt und dort protokolliert werden. Für den Fall, dass der interne Datenspeicher 4a belegt ist, werden die Messdaten im Bedarfsfall in den externen Datenspeicher 6 ausgelesen.

Falls es sich bei dem Modem 5 um ein analoges Modem handelt, kann eine Alarmmeldung bei Überschreitung des ersten Grenzwertes p_{G1} über den ersten Modemanschluss 5.1 auf dem Weg über eine Telefonleitung an einen weit entfernten Ort übertragen werden. Neben dieser Grenzwert-Signalisierung im Alarmfalle lassen sich über den ersten Modemanschluss 5.1 in Verbindung mit der Telefonleitung die Daten bzw. Datensätze fernübertragen.

Falls eine Telefonleitung am Messort und hier im Regelfalle am Ort der Anordnung des Datenmess- und Speichersystems 4 nicht zur Verfügung steht, wird das Modem 5 als sog. GSM-Modem ausgeführt, und die Grenzwert-Signalisierung und/oder die Datenfernübertragung erfolgt über den zweiten Modemanschluss 5.2 auf dem Weg über die Antenne 7 an ein Mobiltelefon oder eine andere in entsprechender Weise ausgestattete Datenempfangsstelle. Dort lassen sich dann die entsprechenden Messdaten speichern, analysieren und auswerten, sodass ein möglichst zeitnahes Handeln und Eingreifen in den Prozess möglich wird.

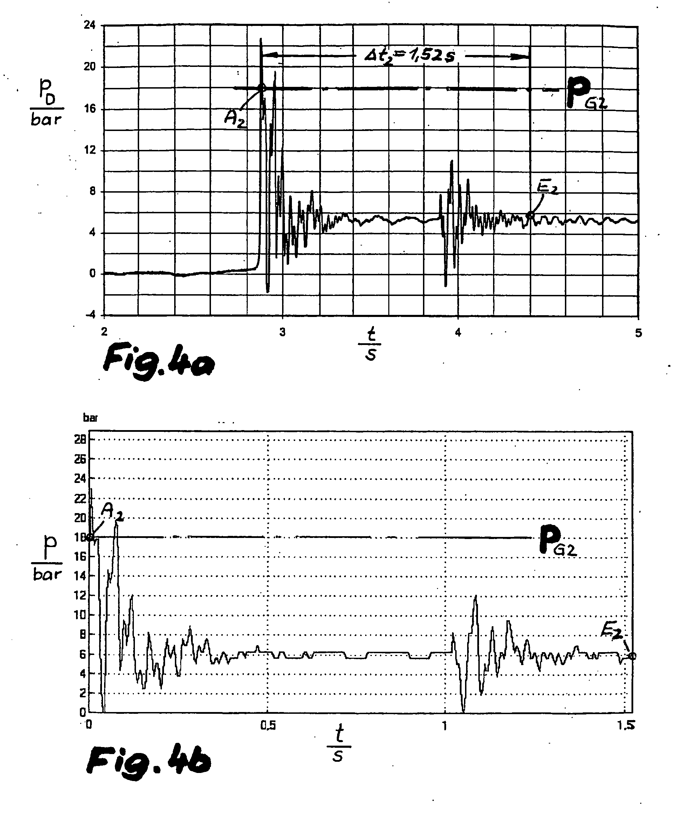

Die Figuren 4a und 4b zeigen jeweils einen zeitlichen Druckverlauf p_{D}(t) bzw. p(t), bei dem der Messvorgang und die Ermittlung des zeitlichen Druckverlaufs bei Überschreiten eines zweiten Grenzwertes p_{G2} ausgelöst wird (zweiter Anfangspunkt der Überwachung A₂; zweiter Endpunkt der Überwachung E₂). Der zweite Grenzwert wurde hier z.B. mit p_{G2} = 18 bar festgelegt, die maximalen Druckspitzen gehen über p = 22 bar hinaus, wobei in dem Leitungsabschnitt 1 eine Strömungsgeschwindigke,it c = 2,5 m/sec vorlag, und die zweite Zeitspanne der Überwachung z.B. Δt₂ = 1,5 s betrug.

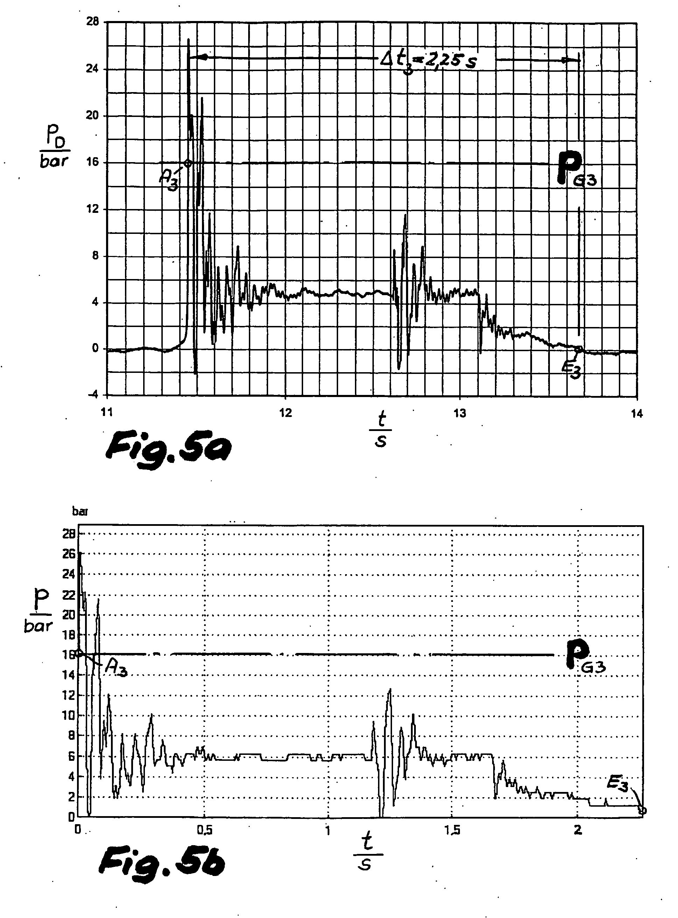

Schließlich, werden in den **Figuren 5a** und **5b** für eine Strömungsgeschwindigkeit c = 3 m/sec im Leitungsabschnitt 1 die gewonnenen zeitlichen Druckverläufe p_{D}(t) bzw. p(t) dargestellt. Bei Erreichen eines vorgegebenen dritten Grenzwertes p_{G3} = 16 bar wird der Messvorgang ausgelöst. Oberhalb des dritten Grenzwertes p_{G3} werden maximale Druckspitzen registriert, die p = 26 bar geringfügig überschreiten. Der Messvorgang erstreckt sich beispielsweise über eine dritte Zeitspanne der Überwachung Δt₃ = 2,25 s.

Wird, wie dies eine vorteilhafte Verfahrensvariante vorsieht, zeitgleich und parallel und am gleichen Messort auch der zeitliche Temperaturverlauf ϑ(t) ermittelt, so ist es möglich, die durch die Temperaturänderung allein bedingte Druckänderung zu ermitteln und im Ergebnis entsprechend zu berücksichtigen.

### BEZUGSZEICHENLISTE DER VERWENDETEN ABKÜRZUNGEN

- 1: Leitungsabschnitt
- 1a: vorgeordneter Leitungsabschnitt
- 1b: nachgeordneter Leitungsabschnitt
- 2: Gehäuse für Messwertaufnehmer
- 2a: Verschlussteil
- 2b: Verbindungsklammer
- 2c: Gehäusedichtung
- 2d: Gehäuseteil
- 3: erster Sensor (Druckaufnehmer)
- 3.1: Leitung für Messdaten
- 3*: zweiter Sensor (Temperaturaufnehmer)
- 4: Datenmess- und Speichersystem
- 4a: interner Datenspeicher
- 4.1: erster Anschluss (für zentrale Steuerung bzw. Rechnereinheit)
- 4.2: zweiter Anschluss (für Drucker)
- 4.3: dritter Anschluss (für-Modem (analog oder GSM))
- 4.4: vierter Anschluss (für externen Datenspeicher)
- 5: Modem (analog oder GSM)
- 5.1: erster Modemanschluss (für Datenfernübertragung (analoges Modem))
- 5.2: zweiter Modemanschluss (für Datenfernübertragung (Antenne für GSM-Modem))
- 6: externer Datenspeicher
- 7: Antenne
- 8: Behälter
- 9: Absperrventil
- 10: Förderpumpe
- 11: Referenzmessung

- Aᵢ: Anfangspunkt der Überwachung
- A₁,A₂,A₃: erster, zweiter, dritter Anfangspunkt der Überwachung
- Eᵢ: Endpunkt der Überwachung
- E₁,E₂,E₃: erster, zweiter, dritter Endpunkt der Überwachung
- P: Produkt
- Q: Volumenstrom

- c: Strömungsgeschwindigkeit
- p: Druck
- p_{D}: Referenzdruck
- p_{G}: Grenzwert
- P_{G1}: erster Grenzwert
- p_{G2}: zweiter Grenzwert
- P_{G3}: dritter Grenzwert
- p_{D}(t): erster zeitlicher Druckverlauf (Referenzmessung)
- p(t): zweiter zeitlicher Druckverlauf (erster Sensor; Druckaufnehmer)
- r: Abtastrate oder Abtastfrequenz
(Anzahl der Messvorgänge pro Zeiteinheit)
- t: Zeit
- Δtᵢ: Zeitspanne
- Δt₁, Δt₂, Δt₃: erste, zweite, dritte Zeitspanne der Überwachung
(jeweils für P_{G1}, p_{G2}, P_{G3})

- ϑ: Temperatur
- ϑ(t): zeitlicher Temperaturverlauf

## Patentansprüche

1. Verfahren zur zeitnahen Überwachung, Erfassung und Übermittlung von physikalischen Größen in verfahrenstechnischen Prozessen, insbesondere von Druck (p) und Temperatur (ϑ), bei dem die Istwerte der in Frage kommenden physikalischen Größen (p; ϑ) bei Überschreiten eines vorgegebenen Grenzwertes (p_{G}) dieser physikalischen Größe (p; ϑ) zeitnah erfasst und für eine Ausgabe derselben oder andere daraus ableitbare Maßnahmen bereitgestellt werden, wobei der jeweilige Grenzwert (p_{G}; ϑ_{G}) einen Bereich der physikalischen Größe (p; ϑ) begrenzt, bei dessen einmaligem oder wiederholtem Verlassen eine zu überwachende Prozesskomponente Schaden nehmen kann,
**dadurch gekennzeichnet,**
• **dass** bei Überschreiten des Grenzwertes (p_{G}; ϑ_{G}) eine Zeitspanne (Δt) der Überwachung beginnt, in der mit einer vorbestimmten Abtastrate (r) die Istwerte der physikalischen Größe (p; ϑ) gemessen und gespeichert werden,
• **dass** die Kriterien zur Beendigung der Zeitspanne (Δt) im Vorhinein festgelegt sind,
• und **dass** die aus den Istwerten der physikalischen Größen (p; ϑ) resultierenden Prozessdaten dem Ort, dem Datum und der Uhrzeit ihrer Generierung eindeutig zugeordnet werden.

2. Verfahren nach Anspruch 1,
**dadurch gekennzeichnet,**
**dass** die Zeitspanne (Δt) der Überwachung beendet wird, wenn der Grenzwert (p_{G}; ϑ_{G}) unterschritten ist und das Maß der Unterschreitung einen vorgegebenen Betrag oder einen vorgegebenen Prozentsatz vom Grenzwert (p_{G}; ϑ_{G}) erreicht hat.

3. Verfahren nach Anspruch 1,
**dadurch gekennzeichnet,**
**dass** nach Ablauf der Zeitspanne (Δt) die Istwerte der physikalischen Größen (p; ϑ) weiter fortlaufend gemessen und angezeigt werden.

4. Verfahren nach einem der Ansprüche 1 bis 3,
**dadurch gekennzeichnet,**
**dass** die Messung und Speicherung der physikalischen Größen (p; ϑ), unabhängig von Grenzwertüberschreitungen, zu bestimmten Zeiten und über bestimmte vorgegebene Zeitspannen erfolgt.

5. Verfahren nach einem der Ansprüche 1 bis 4,
**dadurch gekennzeichnet,**
**dass** die gewonnenen Prozessdaten angezeigt, ausgedruckt oder ausgelesen werden.

6. Verfahren nach Anspruch 5,
**dadurch gekennzeichnet,**
**dass** das Auslesen der Prozessdaten durch drahtlose oder drahtgebundene Datenfernübertragung erfolgt.

7. Verfahren nach einem der Ansprüche 1 bis 6,
**dadurch gekennzeichnet,**
**dass** Grenzwertverletzungen signalisiert werden.

8. Verfahren nach Anspruch 7,
**dadurch gekennzeichnet,**
**dass** die Signalisierung am Ort der Erfassung und/oder am Ort der Speicherung erfolgt.

9. Verfahren nach Anspruch 7,
**dadurch gekennzeichnet,**
**dass** die Signalisierung in Form einer SMS-Meldung an ein Mobiltelefon erfolgt.

10. Verfahren nach Anspruch 7,
**dadurch gekennzeichnet,**
**dass** die Signalisierung in Form einer Sprachausgabe über einen Telefonanschluss erfolgt.

11. Ein durch die Merkmale der Ansprüche 1 bis 10 gekennzeichnetes Verfahren, das gleichzeitig und parallel und am gleichen Ort auf unterschiedliche physikalische Größen wie Druck (p) und Temperatur (ϑ) Anwendung findet.

## Claims

1. A method for real-time monitoring, collecting, and transmitting of physical variables in process engineering processes, especially of pressure (p) and temperature (9), in which, when this physical variable (p; ϑ) exceeds a predefined limit value (p_{G}), the actual values of the physical variables (p; ϑ) to be considered are collected in real time, and are provided for a readout of the same or other measures derived therefrom, wherein the respective limit value (p_{G}; ϑ_{G}) delimits a range of the physical variable (p; 9), at whose single or repeated exceedance a process component to be monitored can incur damage,
**characterized in that**
• when the limit value (p_{G}; ϑ_{G}) is exceeded, a time period (Δt) of monitoring begins, during which the actual values of the physical variable (p; ϑ) are measured and stored at a predetermined sampling rate (r),
• the criteria for ending the time period (Δt) are determined in advance,
• and the process data resulting from the actual values of the physical variables (p; ϑ) are unambiguously assigned the location, the date, and the time of day of their generation.

2. The method according to claim 1,
**characterized in that**
the time period (Δt) of monitoring is ended, when the limit value (p_{G}; ϑ_{G}) is no longer exceeded, and the extent below the limit value has reached a predetermined amount or a predetermined percentage of the limit value (p_{G}; ϑ_{G}).

3. The method according to claim 1,
**characterized in that**
after expiration of the time period (Δt) the actual values of the physical variables (p; ϑ) are further continuously measured and displayed.

4. The method according to one of the Claims 1 to 3,
**characterized in that**
the measurement and storage of the physical variables (p; ϑ) occurs, independently of exceeding the limit value, at specific times for specific predetermined time periods.

5. The method according to one of the Claims 1 to 4,
**characterized in that**
the collected process data is displayed, printed or read out.

6. The method according to claim 5,
**characterized in that**
the read out of the process data occurs by wireless or wire connected remote data transmission.

7. The method according to one of the Claims 1 to 6,
**characterized in that**
the violations of the limit values are signaled.

8. The method according to claim 7,
**characterized in that**
the signaling occurs at the location of the recording and / or the location of the storage.

9. The method according to claim 7,
**characterized in that**
the signaling occurs in the form of an SMS message to a mobile phone.

10. The method according to claim 7,
**characterized in that**
the signaling occurs in the form of a voice output via a telephone connection.

11. A method **characterized by** the features of the claims 1 to 10, which is used simultaneously and in parallel, and at the same location with various physical variables such as pressure (p) and temperature (ϑ).

## Revendications

1. Procédé de surveillance, de saisie et de transmission proches dans le temps de grandeurs physiques dans des processus technologiques, en particulier de la pression (p) et de la température (ϑ), dans lequel les valeurs effectives des grandeurs (p ; ϑ) physiques considérées, en cas de dépassement d'une valeur limite (p_{G}) spécifiée de cette grandeur physique (p ; ϑ), sont détectées de manière proche dans le temps, et sont fournies pour une émission de celles-ci ou d'autres mesures pouvant en être déduites, la valeur limite (p_{G} ; ϑ_{G}) respective délimitant une région de la grandeur physique (p ; ϑ), et si l'on s'éloigne de cette région une fois ou plusieurs fois, un composant de processus à surveiller peut être endommagé,
**caractérisé en ce que**,
• lorsque la valeur limite (p_{G}; ϑ_{G}) est dépassée, un intervalle de temps (Δt) de la surveillance commence, dans lequel les valeurs effectives de la grandeur physique (p; ϑ) sont mesurées et enregistrées à une vitesse d'analyse prédéfinie (r),
• les critères d'achèvement de l'intervalle de temps (Δt) sont déterminés à l'avance,
• et **en ce que** les données de processus résultant des valeurs effectives des grandeurs physiques (p ; ϑ) sont associées clairement à l'emplacement, la date et l'heure de leur génération.

2. Procédé selon la revendication 1,
**caractérisé en ce que**,
l'intervalle de temps (Δt) de la surveillance est terminé, lorsqu'on passe en dessous de la valeur limite (p_{G} ; ϑ_{G}), et lorsque l'étendue de sous-dépassement a atteint un niveau spécifié ou un pourcentage spécifié de valeur limite (p_{G} ; ϑ_{G}).

3. Procédé selon la revendication 1,
**caractérisé en ce que**,
après écoulement de l'intervalle de temps (Δt), les valeurs effectives des grandeurs physiques (p ; ϑ) continuent à être mesurées et affichées.

4. Procédé selon une des revendications 1 à 3,
**caractérisé en ce que**,
la mesure et l'enregistrement des grandeurs physiques (p; ϑ) ont lieu indépendamment des dépassements de la valeur limite, à des moments définis et à des intervalles de temps précisément définis.

5. Procédé selon une des revendications 1 à 4,
**caractérisé en ce que**,
les données de processus obtenues sont affichées, imprimées ou consultées.

6. Procédé selon la revendication 5,
**caractérisé en ce que**,
la consultation des données de processus a lieu par télétransmission de données sans fil ou câblée.

7. Procédé selon une des revendications 1 à 6,
**caractérisé en ce que**,
des atteintes à la valeur limite sont signalées.

8. Procédé selon la revendication 7,
**caractérisé en ce que**,
la signalisation a lieu à l'endroit de la détection et/ou à l'endroit de l'enregistrement.

9. Procédé selon la revendication 7,
**caractérisé en ce que**,
la signalisation a lieu sous la forme d'un message SMS sur un téléphone mobile.

10. Procédé selon la revendication 7,
**caractérisé en ce que**,
la signalisation a lieu sous la forme d'une réponse vocale via une liaison téléphonique.

11. Procédé **caractérisé par** les caractéristiques des revendications 1 à 10 qui s'applique simultanément, parallèlement et au même endroit à différentes grandeurs, telles que la pression (p) et la température (ϑ).
